# EUROPEAN PATENT APPLICATION

(11) **EP 4 811 183 A1**
(43) Date of publication of application: **23.09.2026**
(21) Application number: 25164154.4
(22) Date of filing: 17.03.2025
(51) Int. Cl.: G06F 21/44, G06F 21/00

(54) **METHOD FOR VERIFYING THE IDENTITY OF AN ELECTRONIC DEVICE**

(71) Applicant: Wallbid Limited, London N3 1XW (GB)
(72) Inventor: Stivaktakis, Vasileios, 15234 Chalandri (GR)
(74) Representative: Kouzelis, Dimitrios

(57) **Abstract**

The present invention refers to a computer-implemented method for verifying the identity of an electronic device (10). The method comprises the steps of initiating a screen capturing session of the electronic device (10) for capturing a screen (11) of the electronic device (10), instructing the display of the device identifier on a screen (11) of the electronic device (10) during the screen capturing session in response to/upon receiving an input signal, receiving at least one image of the captured screen (11) of the electronic device (10); and processing the at least one image for capturing the device identifier of the electronic device (10). The input signal indicates the completion of an action by the user. The action triggers a device identifier of the electronic device (10) to be displayed on the screen (11).

## Description

The present invention refers to a method for verifying the identity of an electronic device, in particular a mobile electronic device.

Electronic devices such as mobile phones, tablets and smartwatches have become ubiquitous in modern society, with users relying on them for communication, productivity, entertainment, and various other functions. As these devices have grown more sophisticated and valuable, there has been an increasing need to protect them from damage, loss, or theft.

In view of this, there is a growing demand for efficient and accurate verification methods of the identity of electronic devices. Such methods can have applications in various fields, including device management, second-hand device markets, and protection services.

It is thus an object of the present invention to propose a trustworthy and user-friendly method for verifying the identity of an electronic device.

In the following, a computer-implemented method for verifying the identity of an electronic device is proposed. The method comprises an initiating step, an instructing step, a receiving step, and a processing step. In the initiating step, a screen capturing session of the electronic device for capturing a screen of the electronic device is initiated. The instructing step comprises instructing the display or in other words the presentation of the device identifier on the screen of the electronic device during the screen capturing session. This is done in response to/upon receiving an input signal that indicates the completion of an action by the user. The action (the completion of the action) triggers a device identifier of the electronic device to be displayed on the screen. In the receiving step, at least one image of the captured screen of the electronic device is received. In the processing step, the at least one image, i.e. the at least one received image, is processed for capturing the device identifier of the electronic device. It is understood that all the aforementioned steps are executed by a processing means/data processing means or processing system/data processing system. In other words, the aforementioned steps are electronically executed or are computer-implemented steps. The data processing means or data processing system can be or comprise a processor/processing unit, preferably a CPU. It is however possible that the data processing system is or comprises a motherboard comprising a processor/processing unit, particularly a CPU, and/or a microcontroller.

The data processing means/system is advantageously configured to communicate with an operating system of the electronic device. The operating system of the electronic device can in particular connect the data processing means/system and a hardware component of the electronic device. In other words, the data processing means/system can communicate with a hardware component via the operating system.

In particular, the data processing means/system is configured to receive an input signal/data from or send an output signal/data to the electronic device, in particular the operating system and/or a hardware component of the electronic device for executing the steps of the proposed method. For example, in the receiving step, the at least one image is received from the electronic device, in particular from its operating system, by the data processing means/system.

The step of initiating a screen capturing session of the electronic device allows for the capture of visual information displayed on the screen of the device, providing a reliable means of obtaining data directly from the electronic device. By capturing the device identifier directly from the screen, the method provides a high level of assurance that the device identifier belongs to the specific electronic device being verified. Thus, the possibility of fraud can be reduced, if not completely eliminated. The use of a screen capturing session also allows for remote verification without requiring physical access to the device by a person requesting the verification of the identity of the electronic device from its owner, making thus the process more convenient and efficient. Further, the proposed method can overcome or work around the limitation that all smartphone operating systems have chosen for privacy reasons to not allow application developers to programmatically (by means of programming) access any device identifier.

Within the context of the present invention, the term "device identifier" may in particular refer to a unique alphanumeric code associated with a specific electronic device. As will also be described later, an advantageous example of a device identifier is the International Mobile Equipment Identity (IMEI) number, which is in particular a 15-digit code used to uniquely identify mobile devices.

"Screen capturing" in particular means the process of digitally capturing visual output displayed on a screen of the electronic device. This may involve capturing still images or a moving image, in particular a video, of the screen contents.

The action to be completed is advantageously a predefined action by the manufacturer of the electronic device and cannot be altered by the user. In other words, the predefined action and the result achieved when the predefined action is performed/completed, i.e., the presentation of the device identifier on the screen of the electronic device, is pre-programmed/pre-stored in the electronic device as read-only data. In particular, entering the IMEI directly e.g. by typing, by the user is not as an action, which or the completion of which triggers the display/presentation of the device identifier within the context of the present invention. In other words, the action does not comprise (manually) entering/typing the device identifier.

It is further understood that the electronic device is configured to execute a screen capturing session. In other words, screen capturing is supported by the electronic device.

For completing said action, the user may enter/start an application and/or environment of the electronic device, via which the action can be completed.

In the instructing step, the electronic device, in particular a display controller, may be instructed for displaying/presenting the device identifier on the screen of the electronic device during the screen capturing session. To this end, the data processing means/system sends a corresponding signal to the electronic device, in particular the operating system, which in turns instructs the display controller for presenting the device identifier on the screen.

It is understood that the expression "during the screen capturing session" means that the instructing step is executed while the screen capturing session is still active, namely while the screen, i.e., its contents, is/are being captured. In other words, the screen capturing session continues when the instructing step is executed. In particular, the screen capturing session continues, namely the capturing of the screen of the electronic device, continues until a termination signal is received. The advantageous configurations regarding the termination of the screen capturing session are explained later.

The processing step may advantageously comprise the sub-step of determining if the device identifier is present in the at least one image of the captured screen and the sub-step of capturing (extracting) the device identifier from the at least one image if it is determined that the device identifier is present in the at least one image. In this case, the computer-implemented method for verifying the identity of an electronic device can in particular comprise the steps of initiating a screen capturing session of the electronic device for capturing a screen of the electronic device, instructing the display of the device identifier on a screen of the electronic device during the screen capturing session, wherein the display of the device identifier is instructed in response to/upon receiving an input signal that indicates the completion of an action by the user, wherein the action triggers a device identifier of the electronic device to be displayed on the screen, receiving at least one image of the captured screen of the electronic device that includes the device identifier, and capturing the device identifier of the electronic device from the at least one received image.

If it is determined that the device identifier is not present in the at least one image, the method may advantageously comprise prompting the user to repeat the procedure. This can for example be done by instructing the electronic device to present a corresponding visual and/or audio message to the user. The situation that the device identifier is not present in the at least one image may for example arise from image quality issues, timing issues or technical failures of the electronic device during the execution of the method. As an example of possible timing issues, the following is described. If the user does not perform the required action as mentioned above, the method may advantageously proceed so that at least one image is received and processed to determine if the device identifier is present in the at least one image. Since the user has not performed the required action to trigger the presentation of the device identifier on the screen of the electronic device, the at least one image will not include the device identifier. Thus, the processing of the at least one image will result in determining that the device identifier is not present in the at least one image.

The method may further advantageously comprise instructing the user to perform the action that triggers the device identifier to be displayed on the screen of the electronic device, i.e. triggers the presentation of the device identifier on the screen. It is understood that this takes place before/prior to the above-described instructing step.

The action that triggers the device identifier to be displayed on the screen may advantageously comprise entering, in particular dialling, a predefined code (device identifier retrieval code) or a predefined code sequence (device identifier retrieval sequence). This approach provides a standardized process for accessing the device identifier across different device models and operating systems. The predefined code or code sequence may be a universal code or code sequence, respectively, recognized by most or all models of an electronic device or a user-specific code or code sequence provided to the user. The term "code sequence" in particular reflects that multiple characters are entered in a specific order. As mentioned above, for completing the action, the user may enter/start an application and/or environment of the electronic device, via which the action can be completed. In this configuration, the application and/or environment of the electronic device is the one through which the predefined code or the predefine code sequence can be entered, in particular dialled. For example, if the electronic device is a mobile phone, said application and/or environment may in particular be a phone application, through which phone calls can be executed.

The action that triggers the device identifier to be displayed on the screen may advantageously comprise activating a designated user interface element on the electronic device. This can comprise for example tapping a specific button or icon on the screen of the electronic device. Using a designated user interface element provides a clear and straightforward way for users to trigger the presentation of the device identifier on the screen of the electronic device. "Designated" means in particular that the user interface element is specifically assigned to or chosen for the function of triggering the presentation of the device identifier and in particular also that it is intentionally marked for this specific use. As mentioned above, for completing the action, the user may enter/start an application and/or environment of the electronic device, via which the action can be completed. In this configuration, the application and/or environment of the electronic device is the one that comprises the designated user interface element.

The action that triggers the device identifier to be displayed on the screen may advantageously comprise accessing a device menu where the device identifier is stored. This approach leverages the internal storage to retrieve the device identifier, which can be particularly useful for electronic devices that do not have a built-in function to display the device identifier through a simple code or code sequence entry. As mentioned above, for completing the action, the user may enter/start an application and/or environment of the electronic device, via which the action can be completed. In this configuration, the application and/or environment of the electronic device is the device menu where the device identifier is stored.

As presented above, the device identifier may advantageously be the IMEI number of the electronic device. Using the IMEI number provides a standardized and unique identifier for electronic devices, enhancing the reliability of the verification process. It is in particular understood that, in this configuration, the electronic device advantageously has a SIM card slot. The action that triggers the IMEI number to be displayed on the screen may advantageously comprise entering, in particular dialling, a USSD number, for example *#06#, or activating a designated user interface element on the electronic device that is configured to dial this number, if supported from the device operating system of the electronic device. However, other device identifiers such as the serial number of the electronic device may also be used.

The step of initiating the screen capturing session may advantageously comprise instructing the electronic device, in particular an operating system of the electronic device, to start capturing a plurality of still images or a moving image, in particular a video, of the screen of the electronic device. This means in particular that the data processing means/system instructs the electronic device in particular the operating system, accordingly. For this purpose, the data processing means/system sends a corresponding signal to the operating system. As a response, the electronic device starts capturing said plurality of still images or said moving image. Capturing a moving image allows for a continuous record of the screen contents, which can be particularly useful if the device identifier is displayed briefly or if multiple steps are required to access it. On the other hand, capturing a plurality of still images can be advantageous if there is not enough free space on the electronic device. The still images can in particular be understood as screenshots.

The step of processing the at least one image may advantageously comprise using text recognition for capturing the device identifier. Text recognition techniques, such as optical character recognition (OCR), can automatically extract alphanumeric information from an image. This automation reduces the potential for human intervention and allows for rapid processing of multiple images if necessary. Other image analysis techniques can however also be used.

The present invention further refers to a data processing system comprising means for carrying out the steps of the previously described computer-implemented method for verifying the identity of an electronic device. The data processing system may in particular comprise a processing unit for the initiating step (first processing unit), a processing unit (second processing unit) for the instructing step, a processing unit (third processing unit) for the receiving step, a processing unit (fourth processing unit) for the processing step, and a processing unit (fifth processing unit) for the validating step. These units may be separate processing units or formed as a single processing unit.

The method may advantageously further comprise the step of validating the captured device identifier by using at least one external database with stored device identifiers, in particular by integrating with an API (Application Programming Interface) of the at least one external database. In the context of this disclosure, API may in particular refer to a set of protocols and tools that allow integration with external databases for the purpose of validating device identifiers.

Within the context of the present invention, "validating the captured device identifier" may be understood as the process of verifying the authenticity and accuracy of the captured device identifier through comparison with external data sources.

In particular, the step of validating the captured device identifier may advantageously comprise querying the external database to validate if/that the captured device identifier exists in the external database. If the captured device identifier exists in the external database, it is concluded that the device identifier is valid. "External database" refers in particular to a collection of data stored outside the electronic device. Such an external database comprises stored device identifiers and information associated to the device identifiers. In the case of the device identifier being the IMEI number, the external database can be the database of an IMEI database provider.

The following sub-steps of the step of validating the capture device identifier may advantageously be executed after the above sub-step, i.e., after it has been concluded that the device identifier is valid.

In particular, the step of validating the captured device identifier may advantageously comprise retrieving device specifications associated with the captured device identifier from the external database and comparing them with specifications of the electronic device. "Device specifications" are in particular technical characteristics and capabilities of the electronic device. These may include information such as the device make and model, operating system, storage capacity, and other hardware features of the electronic device. If the comparison results in a match between the specifications of the electronic device and the retrieved specifications, the assurance that the device identifier is valid can be increased.

In particular, the step of validating the captured device identifier may advantageously comprise checking a status field in the external database associated with the captured device identifier to determine if the device identifier is flagged as blocked by any service providers. Within the context of the present invention, the term "status field" in particular refers to a data element in an external database that indicates the current state or condition of a device identifier. This field may be used to flag identifiers associated with devices that have been reported as lost, stolen, or otherwise blocked from normal use.

In particular, the step of validating the captured device identifier may advantageously comprise retrieving a manufacture date and/or a release date and/or an activation date, associated with the captured device identifier from the external database, and determining the age of the electronic device based on the retrieved date(s). "Manufacture date" or "release date" refers to the date when an electronic device was produced or officially made available for sale, respectively. The activation date is the date on which the electronic device was powered on for the first time. This information is used to calculate the age of the electronic device. It is noted that the age of the electronic device is understood as the time elapsed between the manufacture date, release date or activation date and the present date on which the method is executed. The determined age of the electronic device indicates the actual use period of the electronic device, when the activation date is available and used for the determination of the age of the electronic device. When only the manufacture date and/or the release date is/are available and/or if only these dates are used alone or in combination with each other for the determination of the age of the electronic device, the determined age indicates an estimation of the actual period of use of the electronic device.

Further, the determined age may be advantageously compared to a predefined age limit. The term "predefined age limit" may in particular refer to a maximum allowable age for an electronic device for a specific purpose. This may be set by a service provider or system administrator. This limit may be used to determine if the electronic device is eligible for certain services or processes based on its age. The predefined age limit may advantageously be stored in the external database.

The step of validating the captured device identifier may advantageously comprise retrieving a warranty period, in other words whether the electronic device is still within the manufacturer's warranty period, and/or a distribution country of the electronic device, in other words the country in which the electronic device was first distributed in.

The result of the comparison of the determined age of the electronic device with the predefined age limit and/or the information about the warranty period and/or the information about the distribution country of the electronic device can in particular be used for validating commercial constraints.

The method may further advantageously comprise the step of terminating the screen capturing session automatically after a predetermined time has lapsed from the initiation of the screen capturing session. This helps to limit the amount of data captured and processed, improving efficiency and reducing the risk of capturing unnecessary or sensitive information. Further, the automatic termination after a predetermined period serves as a failsafe mechanism, ensuring the session does not continue indefinitely if the user forgets to end it manually. The predetermined time can advantageously be set based on the expected duration needed to complete the action that triggers the device identifier to be displayed on the screen of the electronic device. The predetermined time may preferably be less than one minute, in particular equal to 30 seconds.

Alternatively, or in addition thereto, the method may advantageously comprise the step of prompting the user to terminate the screen capturing session and in particular also the step of terminating the screen capturing session in response to receiving a termination input by the user and/or if no termination input has been received within a predetermined period. Apart from the advantages of data minimization and efficiency improvement, this configuration allows the user to actively end the screen capturing session when he/she has completed the necessary actions, providing a sense of control and privacy. It is understood that the predetermined period is in particular counted from the time of prompting the use to terminate the screen capturing session. The predetermined period can advantageously be set based on the expected duration needed to complete the action that triggers the device identifier to be displayed on the screen of the electronic device. In particular, the step of prompting the user to terminate the screen capturing session is advantageously executed in response to detecting or when it is detected, by the data processing means/system, that the application and/or environment that the user has entered/started for completing the action that triggers the presentation of the device identifier on the screen of the electronic device has been closed/ended by the user. Thus, if the present method is realised as a device identity verifying application, the step of prompting the user to terminate screen capturing session can advantageously be executed in response to detecting or when it is detected, by the data processing means/system, that said application and/or environment of the electronic device has been closed/ended by the user and the user has entered again the device identity verifying application.

Further, limiting the duration of access to the screen content reduces the window of opportunity for potential security vulnerabilities. Further, ending the screen capture promptly can help conserve battery life by reducing unnecessary background processes. In particular, the combination of manual and automatic termination options increases the flexibility of the method, as it may accommodate different user preferences and scenarios.

If the method comprises both the step of terminating the screen capturing session automatically after a predetermined time has lapsed from the initiation of the screen capturing session and the step of prompting the user to terminate the screen capturing session, it is in particular understood that the step of prompting the user to terminate screen capturing session is executed before the step of terminating the screen capturing session automatically after a predetermined time has lapsed. In other words, the screen capturing session can maximally last the time predetermined time, for example 30 seconds, after initiation of the screen capturing session. If screen capturing is not terminated by the user within this time frame, the screen capturing session is terminated automatically, in the aforementioned example after 30 seconds from its initiation.

It is understood that terminating the screen capturing initiation means in particular that the data processing means/system instructs the electronic device, in particular the operating system of the electronic device, to terminate the screen capturing session. To this end, the data processing means/system sends a corresponding signal to the electronic device, in particular the operating system.

The at least one image, which is referred to in the receiving and the processing step described above, may advantageously comprise at least one still image, in particular a plurality of still images. Receiving one or more still images can be advantageous in situations where bandwidth or storage limitations make receiving of a moving image, in particular a video, impractical. Still images can also be easier to process, thereby using less processing/computational power and/or speeding up the process.

Advantageously, the at least one image, which is referred to in the receiving and the processing step, may however also comprise a moving image, in particular a video, or at least one frame, in particular a plurality of frames, of a moving image. In this configuration, it is understood that the step of initiating the screen capturing session advantageously comprises instructing the electronic device, in particular its operating system, to start capturing a moving image, in particular a video, of the screen of the electronic device. From this moving image, in particular video, at least one frame is received and processed. Using frames from a moving image provides flexibility in selecting the clearest or most relevant image for processing.

According to an advantageous configuration, the step of initiating the screen capturing session comprises instructing the electronic device, in particular its operating system, to start capturing a moving image, in particular a video, of the screen of the electronic device, while the step of receiving at least one image of the captured screen of the electronic device and the step of processing the at least one image for capturing the device identifier of the electronic device can be understood as receiving and processing the moving image, in particular the video. Thus, it can be ensured that the device identifier will be in at least one frame of the moving image.

The captured device identifier and/or information derived from validating the captured device identifier can advantageously be stored in the electronic device and/or transmitted to an external source. The external source may for example be a server.

Further disclosed is an electronic device that comprises the data processing means and a display/screen. This screen/display corresponds to the screen mentioned in combination with the previously described method.

The processing means/data processing means or processing system/data processing system may be realised in the electronic device and/or an external system. In other words, the electronic device and/or the external system may comprise the processing means/data processing means or processing system/data processing system. The external system may for example be a server.

The present invention may further refer to the electronic device or a system comprising the electronic device and the external system.

The present invention also refers to a computer program product comprising instructions which, when the program is executed by a computer, in particular of an electronic device, cause the computer to carry out the steps of the previously described computer-implemented method for verifying the identity of an electronic device.

The present invention further refers to a computer-readable storage medium comprising instructions which, when executed by a computer, in particular of an electronic device, cause the computer to carry out the steps of the previously described computer-implemented method for verifying the identity of an electronic device.

The electronic device may advantageously be a mobile phone, in particular a smartphone, a tablet a smartwatch. The electronic device may advantageously comprise a SIM card slot for receiving a SIM card.

The described computer-implemented method for verifying the identity of an electronic device has numerous potential applications.

In the telecommunications sector, mobile network operators may utilize this method to streamline device upgrade and trade-in processes. When customers wish to exchange their current devices for newer models, the proposed method allows operators to quickly and securely confirm the identity of the device being traded in, reducing the risk of fraud and improving operational efficiency.

Insurance companies may implement this method to enhance their claims processing for mobile device insurance. When policyholders file claims for damaged devices, insurers can use this method to verify the identity of the claimed device. This capability helps prevent fraudulent claims and expedites the verification process, potentially leading to faster claim resolutions and improved customer satisfaction.

Retailers and e-commerce platforms specializing in used electronics may integrate this verification method into their buying and selling processes. When purchasing used devices from consumers, these businesses can quickly verify the device's identity, helping to accurately assess its value and authenticity. This application reduces the risk of acquiring stolen or counterfeit devices and streamlines the valuation process.

Electronic waste recycling facilities may employ this method to improve their sorting and processing procedures. By quickly identifying devices, recyclers can more efficiently route items to appropriate recycling or refurbishment streams based on the device's specifications and potential value. This application contributes to more effective e-waste management and potentially increases the recovery of valuable materials.

In the field of mobile app development and testing, the proposed method may be utilized to ensure that apps are being tested on specific device models. Developers and quality assurance teams can use the method to confirm the identity of test devices, ensuring that their applications are being evaluated on the intended hardware configurations.

In the context of mobile device repair services, the proposed method may be used to confirm device identities before and after repairs in a trustworthy way. This application helps prevent disputes regarding device swapping and ensures that the correct device is being returned to the customer after service.

Its is not noted that the identity of the electronic device advantageously corresponds to or is represented by the device identifier, while verifying the identity of the electronic device advantageously comprises capturing the device identifier and preferably also the information about the validity of the device identifier, i.e. whether the device identifier is valid or not.

These and further details, advantages and features of the present invention will be described based on an embodiment of the invention and by taking reference to the accompanying figures.
Figure 1 shows a flowchart referring to a computer-implemented method for verifying the identity of an electronic device according to an embodiment of the present invention.
Figure 2 shows an electronic device with a data processing system that is configured to execute the computer-implemented method according to the embodiment.
Figure 3 shows a schematic representation of the computer-implemented method according to the embodiment.

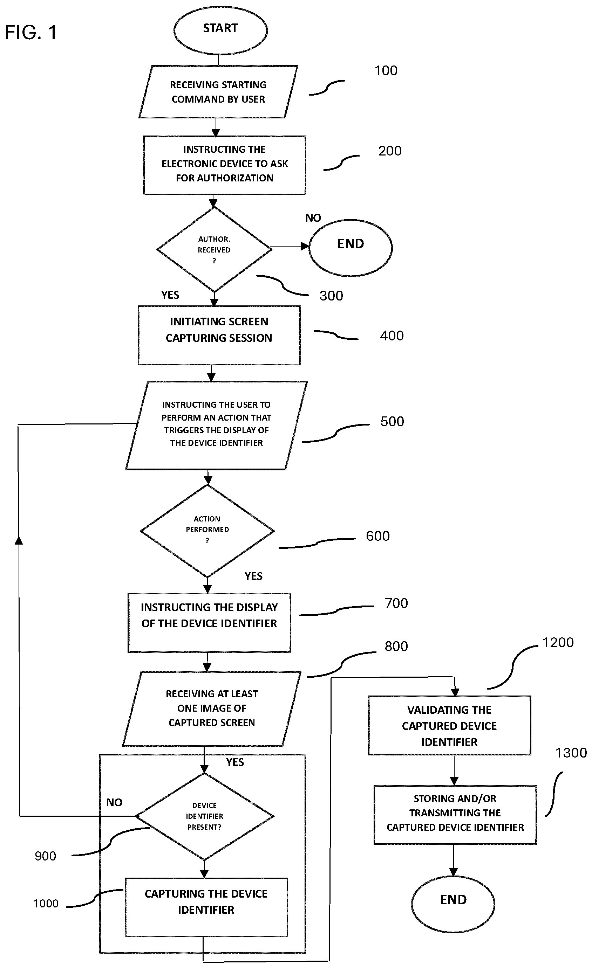

In the following, a computer-implemented method for verifying the identity of an electronic device 10 according to an embodiment of the present invention is described in detail with reference to figures 1 to 3.

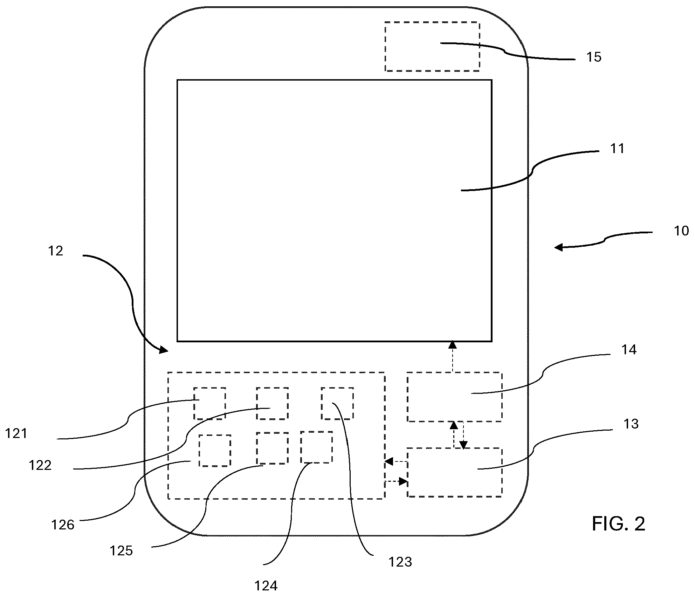

As can be seen from figure 2, the electronic device 10 is here a mobile phone, in particular a smartphone. However, the electronic device 10 can for example also be a tablet or a smartwatch. The identity of other types of electronic devices can also be verified with the present method.

The electronic device 10 comprises a screen 11 and a data processing system 12. The data processing system 12 can in particular be realised as a processor/processing unit, preferably a CPU. It is however possible that the data processing system 12 corresponds to a motherboard comprising a processor/processing unit, in particular a CPU, or a microcontroller.

The data processing system 12 comprises means for carrying out the computer-implemented method for verifying the identity of the electronic device 10. In particular, the data processing system 12 comprises for this purpose a first processing unit 121, a second processing unit 122, a third processing unit 123, a fourth processing unit 124, a fifth processing unit 125 and a sixth processing unit 126. The functions of these units will be described later in combination with the proposed computer-implemented method for verifying the identity of the electronic device 10.

With further reference to figure 2, the electronic device 10 also comprises an operating system 13, a display controller 14, and a SIM card slot 15. As can be viewed from said figure, the data processing system 12 is configured to communicate with and exchange input/output signals/data with the operating system 13, indicated by the two arrows pointing in opposite directions between the data processing system 12 and the operating system 13.

Moreover, it can be seen from figure 2 that the operating system 13 is configured to communicate with and exchange input/output signals/data with the display controller 14. In general, the operating system 13 can be seen as the link between the data processing system 12 and any hardware component of the electronic device 10. Thus, in the following, if the data processing system 12 executes a step of initiating or instructing an operation, it can in particular be understood that a signal/data (output signal/data) is sent from the data processing system 12 to the operating system 13, which then in turn instructs a corresponding hardware component of the electronic device 10 responsible for the respective operation to execute the operation. Accordingly, if the data processing system 12 executes a receiving step, this can particularly be understood as receiving a signal/data (input signal/data) from the operating system 12 which in turn has received a signal from a respective hardware component of the electronic device 10.

The identity of the electronic device 10 to be verified comprises a device identifier that, in the present embodiment, corresponds to the IMEI number of the electronic device 10. Using the IMEI number as the device identifier has the advantage that the IMEI number constitutes a standardized identifier used for identifying electronic devices of different manufacturers. It is, however, possible that other device identifiers can be used, such as the serial number of the electronic device 10.

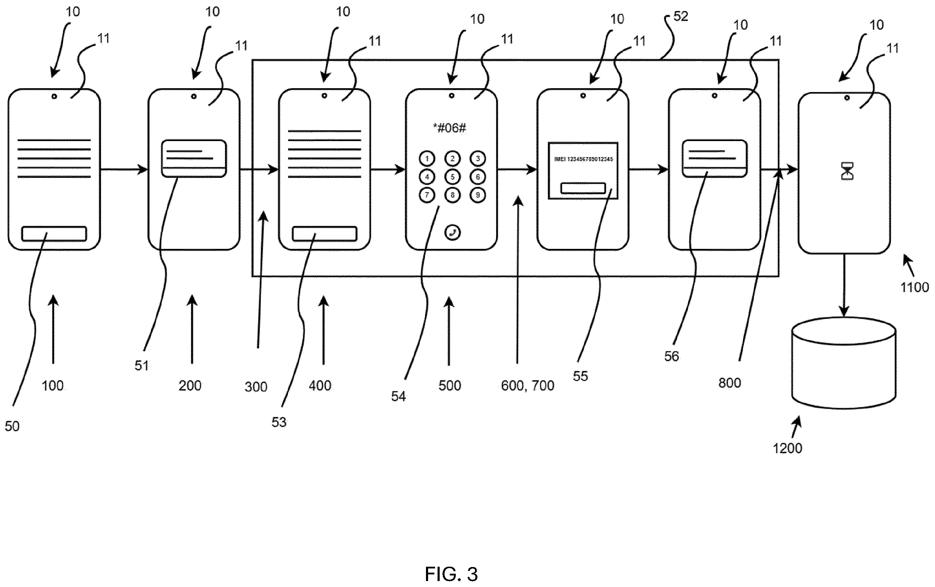

According to figure 1, the method may start by receiving a starting command by a user for initiating a screen capturing session in a starting step 100. This can be done by the user clicking a button 50 shown on the screen 11 of the electronic device 10. The button 50 is depicted in figure 3. In other words, clicking the button 50 sends the starting command to the data processing system 12.

Upon/in response to receiving the starting command, the electronic device 10, in particular the operating system 13, is instructed to ask the user to authorize the initiation of the screen capturing session for capturing a screen of the electronic device in an authorization instructing step 200. To this end, a system dialog 51 according to figure 3 can for example appear on the screen 11. Via the system dialog 51, the user can choose the authorization of the initiation of the screen capturing session. The starting command is received by the data processing system 10, which also sends the instruction to the electronic device 10, in particular the operating system 13, to ask the user said authorization.

If a positive answer from the user is received, namely if the user has authorized the initiation of the screen capturing session in an authorizing step 300, the method proceeds to the execution of an initiating step 400. In the initiating step 400, a screen capturing session of the electronic device 10 for capturing the screen 11, namely the contents displayed on the screen 11, is initiated. This step is executed by the data processing system 12 and in particular by the first processing unit 121. If no authorization is received, the execution of the method is terminated.

The initiating step 400 particularly comprises instructing the electronic device 10, in particular its operating system 13, to start capturing a video of the screen 11, i.e., a video of its displayed contents over time. As a response to said instruction, the electronic device 10 starts capturing the video. The screen capturing session is indicated by a box 52in figure 3.

Following that, the method proceeds to the execution of a user instructing-prompting step 500.

The user instructing-prompting step 500 comprises instructing the user during the screen capturing session to perform a specific action that triggers the device identifier, here the IMEI number, to be displayed on the screen 11 of the electronic device 10, i.e., triggers the presentation of the device identifier on the screen 11. This can be done for example by presenting a dialog 53 on the screen 11 of the electronic device 10 asking the user to complete the specific action, as shown in figure 3. The action to be completed is a predefined action by the manufacturer of the electronic device 10 and cannot be altered or modified by the user. In other words, the predefined action and the result that is achieved when the predefined action is performed, namely the presentation of the device identifier on the screen 11 of the electronic device 10, is pre-programmed/pre-stored in the electronic device 10 as read-only data.

The specific action comprises entering, in particular dialling, a predefined code (device identifier retrieval code) or a predefined code sequence (device identifier retrieval sequence) that causes the device identifier, here the IMEI number, to be displayed on the screen 11. In particular, the user is asked to dial a USSD number, for example *#06#. In this case, this means that the user receives the dialog 53 that is of the type "Dial the USSD number *#06#" on the screen 11 of the electronic device 10. The phone app 54 via which the user can dial said predefined code is shown in figure 3.

In addition to entering a predefined code or alternatively, the specific action may comprise activating a designated user interface element on the electronic device 10 that is configured to dial this number, if supported from the device operating system 13 of the electronic device 10. Further, the specific action may also comprise accessing a device menu where the IMEI is stored.

In a checking step 600, it is checked whether the action has been performed, in particular whether an input signal that indicates the completion of said action has been received. Advantageously, for the method to be further executed, the action will have to be performed, in particular the input signal will have to be received, by a time equal to or less than a predetermined time elapsed from the initiation of the screen capturing session. Further, the execution of the method can be terminated if no termination signal has been received in response to prompting the user to terminate the screen capturing session or if a termination signal has not been received within a predetermined time from the time the user is prompted to terminate the screen capturing session.

If the answer is positive in the checking step 600, the method proceeds, in response to receiving said input signal, with the execution of an instructing step 700. In the instructing step 700, the presentation of the device identifier on the screen 11 of the electronic device 10 during the screen capturing session is instructed.

More specifically, the electronic device 10, in particular a display controller 14 via the operating system 13, is instructed for displaying/presenting the device identifier on the screen 11 during the screen capturing session. The instructing step 700 is executed by the data processing system 12 and in particular the second processing unit 122. In figure 3, the device identifier (IMEI) dialog 55 is shown. Further, a system element 56 for the terminated screen capturing session is shown in figure 3.

It is then expected that said instruction causes the electronic device 10 to display the device identifier on the screen 11 during the screen capturing session. This means that it is expected that the captured video of the screen contents will include at least one frame, which contains the device identifier, here the IMEI.

The method proceeds then with a receiving step 800, which comprises receiving the video of the captured screen 11. The receiving step 800 is executed by the data processing system 12 and in particular by the third processing unit 123.

Subsequently, a processing step 1100 is executed. In the processing step 1100, the received video is processed for capturing the device identifier. According to the flowchart of figure 1, the processing step 1100 comprises a presence determining sub-step 900 and a capturing sub-step 1000.

In the presence determining sub-step 900, it is determined if the device identifier is present in the video, i.e., in at least one frame of the video, of the captured screen 11. If the answer is positive, i.e., if the presence of the device identifier is determined in the presence determining sub-step 900, the device identifier is captured (extracted) from the video in a device identifier capturing sub-step 1000.

If the answer is negative in the presence determining sub-step 900, i.e., if it is determined that the device identifier is not present in the video, the method may advantageously comprise prompting the user to repeat the procedure. In particular, the method may return to the instructing-prompting step 500.

For processing the received video for capturing the device identifier, text recognition can be used.

The processing step 1100 is executed by the data processing system 12 and in particular the fourth processing unit 124.

After the processing step 1100, a validating step 1200 for validating the captured device identifier is executed by the data processing system 12 and in particular by the fifth processing unit 125. To this end, at least one external database with stored device identifiers is used. In particular, the data processing system 12 integrates with an API of the at least one external database.

In particular, the validating step 1200 may comprise querying the external database to validate if/that the captured device identifier exists in the external database. If the captured device identifier exists in the external database, it is concluded that the device identifier is valid. Further, the validating step 1200 may comprise, after it is concluded that the device identifier is valid, retrieving device specifications associated with the captured device identifier from the external database and comparing them with specifications of the electronic device 10. The specification may include information such as the device make and model, operating system, storage capacity, and other hardware features of the electronic device 10. If the comparison results in a match between the specifications of the electronic device 10 and the retrieved specifications, the assurance that the device identifier is valid can be increased.

Further, the validating step 1200 may comprise checking a status field in the external database associated with the captured device identifier to determine if the device identifier is flagged as blocked by any service providers.

The validating step 1200 may also comprise retrieving a manufacture date and/or a release date and/or an activation date associated with the captured device identifier from the external database, and determining the age of the electronic device based on the retrieved date(s). The determined age may then be compared to a predefined age limit which refers to a maximum allowable age for the electronic device 10 for a specific purpose.

The captured device identifier and/or information derived from the validating step 1200 can then be stored in the electronic device 10, in particular in a memory thereof, and/or transmitted to an external source. This step is executed by the sixth processing unit 126. The external source may for example be a server.

By capturing the IMEI directly from the screen 11, the proposed computer-implemented method for verifying the identity of the electronic device 10 according to the embodiment provides a high level of assurance that the IMEI belongs to the specific electronic device 10 being verified. Thus, the possibility of fraud can be reduced, if not completely eliminated.

### Reference signs

- 10: electronic device
- 11: screen
- 12: data processing system
- 13: operating system
- 14: display controller
- 15: SIM card slot
- 51: system dialog
- 52: box
- 53: dialog
- 54: phone app
- 55: device identifier (IMEI) dialog

- 100: starting step
- 121: first processing unit
- 122: second processing unit
- 123: third processing unit
- 124: fourth processing unit
- 125: fifth processing unit
- 126: sixth processing unit
- 200: authorization instructing step
- 300: authorizing step
- 400: initiating step
- 500: instructing-prompting step
- 600: checking step
- 700: instructing step
- 800: receiving step
- 900: presence determining sub-step

- 1000: device identifier capturing sub-step
- 1100: processing step
- 1200: validating step
- 1300: storing and/or transmitting step

## Claims

1. A computer-implemented method for verifying the identity of an electronic device (10), comprising the steps of
• initiating a screen capturing session of the electronic device (10) for capturing a screen of the electronic device (10),
• instructing the display of the device identifier on a screen (11) of the electronic device (10) during the screen capturing session, wherein the display of the device identifier is instructed in response to/upon receiving an input signal that indicates the completion of an action by the user, wherein the action triggers a device identifier of the electronic device (10) to be displayed on the screen (11),
• receiving at least one image of the captured screen (11) of the electronic device (10), and
• processing the at least one image for capturing the device identifier of the electronic device (10).

2. The method of claim 1, wherein the processing step comprises:
• determining if the device identifier is present in the at least one image of the captured screen (11), and
• capturing the device identifier from the at least one image if it is determined that the device identifier is present in the at least one image.

3. The method of any of the preceding claims, further comprising the step of instructing the user to perform the action that triggers the device identifier to be displayed on the screen (11) of the electronic device (10).

4. The method of any of the preceding claims, wherein the action that triggers the device identifier to be displayed on the screen (11) of the electronic device (10) comprises entering, in particular dialling, a predefined code or a predefined code sequence and/or activating a designated user interface element on the electronic device (10) and/or accessing a device menu where the device identifier is stored.

5. The method of any of the preceding claims, wherein the device identifier is the IMEI number of the electronic device (10).

6. The method of any of the preceding claims, wherein the step of initiating the screen capturing session comprises instructing the electronic device (10), in particular an operating system (13) of the electronic device (10), to start capturing a plurality of still images or a moving image of the screen (11) of the electronic device (10).

7. The method of any of the preceding claims, wherein the step of processing the at least one image comprises using text recognition for capturing the device identifier.

8. The method of any of the preceding claims, further comprising:
the step of terminating the screen capturing session automatically after a predetermined time has lapsed from the initiation of the screen capturing session,
and/or
the step of prompting the user to terminate the screen capturing session and the step of terminating the screen capturing session in response to receiving a termination input by the user and/or if no termination input has been received within a predetermined period.

9. The method of any of the preceding claims, wherein the at least one image comprises at least one still image, in particular a plurality of still images, or wherein the at least one image comprises at least one frame, in particular a plurality of frames, of a moving image or a moving image.

10. The method of any of the preceding claims, further comprising the step of validating the captured device identifier by using at least one external database with stored device identifiers, in particular by integrating with an API of the at least one external database.

11. The method of claim 10, wherein the step of validating the captured device identifier comprises:
• querying the external database to verify that the captured device identifier exists in the external database,
in particular wherein the step of validating the captured device identifier further comprises:
• retrieving device specifications associated with the captured device identifier from the external database and comparing them with specifications of the electronic device (10), and/or
• checking a status field in the external database associated with the captured device identifier to determine if the device identifier is flagged as blocked by any service providers,
and/or
• retrieving a manufacture date and/or a release date and/or an activation date associated with the captured device identifier from the external database, determining the age of the electronic device (10) based on the retrieved date(s), and in particular also comparing the determined age to a predefined age limit, and/or
• retrieving a warranty period and/a distribution country of the electronic device (10).

12. The method of any of the preceding claims, wherein the captured device identifier and/or information derived from validating the captured device identifier is stored and/or transmitted to an external source.

13. A data processing system (12) comprising means for carrying out the steps of the method of any of claims 1 to 12.

14. A computer program product comprising instructions which, when the program is executed by a computer, cause the computer to carry out the steps of the method of any of claims 1 to 12.

15. A computer-readable storage medium comprising instructions which, when executed by a computer, cause the computer to carry out the steps of the method of any of claims 1 to 12.
